# EUROPEAN PATENT APPLICATION

(11) **EP 2 763 423 A1**
(43) Date of publication of application: **06.08.2014**
(21) Application number: 14150624.6
(22) Date of filing: 09.01.2014
(51) Int. Cl.: H04N 21/436, H04N 21/442, H04N 21/462, H04N 21/472, H04N 21/41, H04N 21/414, H04N 21/478

(54) **Method and apparatus for reproducing content**

(30) Priority: 01.02.2013 KR 20130011660
(71) Applicant: Humax Co., Ltd., Seongnam-si, Gyeonggi-do 463-825 (KR)
(72) Inventor: Kim, Kyungku, Anyang-si (KR)
(74) Representative: Zardi, Marco

(57) **Abstract**

A method for reproducing content is disclosed. In one embodiment, content is selected from a first device connected to a network and an operation method of one or more second devices included in the network with regard to reproduction of the content can be set. The second devices can be set in a mute mode and messages indicating event generation, received from the second devices during reproduction of the content, can be output when reproduction of the content is ended. When a message is received during reproduction of the content, the message can be immediately output. When messages about events related to the same sender are received a predetermined number of times, a message indicating the same can be output. Devices can be selectively set in the mute mode according to device types. Accordingly, a user can view content while concentrating thereon without being disturbed by external devices.

## Description

### [Technical Field]

The present invention relates to a content reproduction method, and more particularly, to a method for preventing a user who is watching content from being disturbed by other devices.

### [Background Art]

People are frequently hindered by cellular phone or telephone ringtones, text message reception alarms, alarms of a washing machine, etc. when watching TV or movies. Furthermore, people receive many text messages, Kakaotalk messages, telephone calls, etc. while watching TV or movies.

Nowadays busy people are disturbed by unnecessary things when taking a rest, for example, watching movies. Therefore, people may want to enjoy desired content without being hindered by surrounding equipment.

In view of this, the following prior arts were searched using 'content', 'play (viewing, reproduction)' and 'interrupt (call, text message, volume, alarm)' as search words.

Korean Patent No. 2010-0048915 discloses setting of a content reproduction environment as a preferable reproduction environment according to content type upon request of reproduction of specific content.

Korean Patent No. 2005-0059278 discloses a method of recording a connection date, time and channel while storing a TV program when a communication event is generated, for example, when a phone rings while a user watches the TV program, and then determining whether to continuously watch the TV program or watch the same from the connection time.

Korean Patent No. 2012-0071159 discloses a method of displaying an alarm signal indicating presence of additional information related to reproduced content in a predetermined position of the image of the reproduced content.

Korean Patent No. 2012-0017278 discloses a method of temporarily interrupting content being reproduced upon generation of an alarm event for a predetermined time and transmitting a signal representing generation of the event to a plurality of devices to reproduce content corresponding to the event.

Korean Patent No. 2011-0045928 discloses a method of providing an incoming call to a pre-registered device if a call processing server is in a call forwarding state when a broadcast reproduction apparatus receives the incoming call and replying with a response to the incoming call when the call processing server is not in the call forwarding state.

### [Disclosure]

### [Technical Problem]

An object of the present invention devised to solve the problem lies in a method for reproducing content without being hindered by surrounding devices.

### [Technical Solution]

The object of the present invention can be achieved by providing a method for reproducing content, including: selecting content from a first device connected to a network; and setting an operation method of one or more second devices included in the network with regard to reproduction of the content.

The setting of the operation method may include setting the second devices in a mute or low-volume mode.

Messages indicating event generation, received from the second devices during reproduction of the content, may be output when reproduction of the content is ended.

The output messages may be displayed in relation to the second devices corresponding thereto.

The output message may be aligned and displayed in chronological order.

When messages are received from the second devices during reproduction of the content, the message may be immediately output.

The names of the second devices and event types related to the messages may be displayed along with the messages.

When the second devices related to the messages correspond to phones, caller information may be displayed along with the messages.

When messages about events related to the same sender are received a predetermined number of times, a message indicating the same may be output.

The setting of the operation method may include selectively setting the second devices in the mute or low-volume mode according to types of the second devices.

In the setting of the operation method, a device related to reproduction of the content or a device related to security may not be set in the mute or low-volume mode.

The mute or low-volume mode may be set based on a file of the content or a program of electronic program guide.

In another aspect of the present invention, provided herein is an apparatus for reproducing content, including: a communication unit for exchanging data with devices connected to a network; and a controller for selecting content from a first device connected to the network and transmitting a signal for setting an operation method of one or more second devices included in the network with regard to reproduction of the content, through the communication unit.

### [Advantageous Effects]

Accordingly, a viewer can watch content to the end without being disturbed by external devices.

Furthermore, the viewer can check events generated while concentrating on watching the content without missing the same.

### [Description of Drawings]

FIG. 1 illustrates a home network configuration in a DLNA environment.
FIG. 2 illustrates an internal configuration of a set-top box to which the present invention is applied.
FIG. 3 is a flowchart illustrating a content reproduction method according to an embodiment of the present invention.
FIG. 4 illustrates operations of a server for reproducing content in a concentration mode and a connected device and signal flows between the server and the connected device.
FIG. 5 illustrates setting of a mute (low volume) mode of a device connected to a home network for concentration mode reproduction of content according to an embodiment of the present invention.
FIG. 6 illustrates a screen displaying events of other devices, which are received during content reproduction, after concentration mode reproduction of content is completed according to an embodiment of the present invention.
FIG. 7 illustrates screens immediately displaying events of other devices, which are received during concentration mode reproduction of content according to an embodiment of the present invention.

### [Best Mode]

Embodiments of a content reproduction method according to the present invention will now be described with reference to the attached drawings.

While a home network capable of managing various devices in a house, such as a PC, printer, TV receiver, set-top box, telephone handset, mobile device, digital camera, audio system, air-conditioner, boiler, lighting fixture, front door, etc., in an integrated manner is constructed, digital living network alliance (DLNA) which constructs compatible platforms has become an industry standard protocol.

DLNA includes network protocols such as IP, HTTP, Wi-Fi, etc. widely used based on universal plug-and-play (UPnP) and also includes standards such as physical media, network transmission, media format, streaming protocol, digital rights management (DRM), etc. and thus devices designed according to DLNA guidelines can freely share various types of media content such as music, pictures, video, etc. through a home network and remotely control other devices.

For example, movie, music, and picture files stored in a PC can be transmitted to a TV receiver or home theater through a wired or wireless network to allow a user to enjoy larger screen and higher picture quality and sound quality. Furthermore, a picture captured using a digital camera can be directly transmitted to a printer and printed and a video captured by a cellular phone can be viewed through a TV receiver. In addition, a game played using a smartphone can be linked to a TV to allow a user to enjoy the game on a larger screen and a movie watched through a notebook computer can be enjoyed through a TV receiver with high resolution.

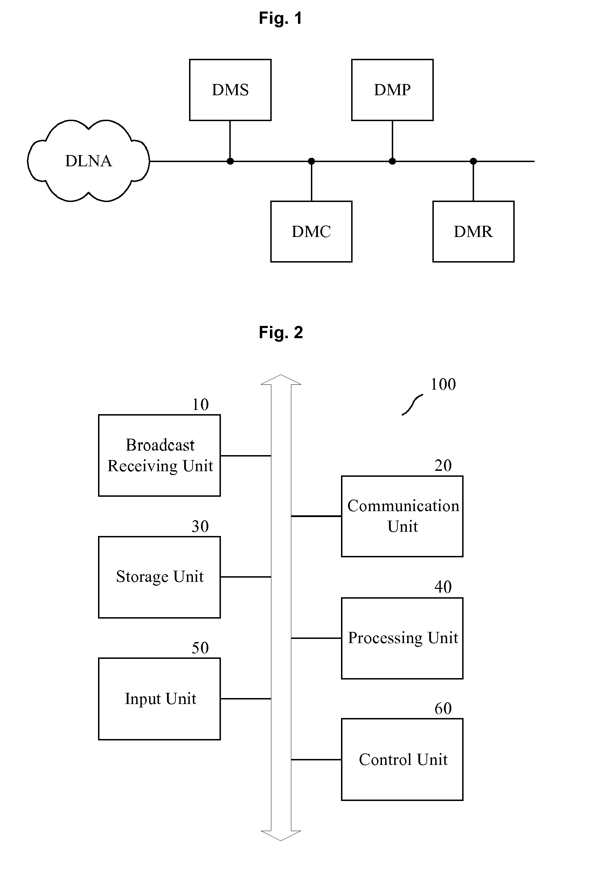

FIG. 1 illustrates a home network configuration in a DLNA environment.

A home network in the DLNA environment can be connected to various devices in a wired or wireless manner. Devices connected to the home network in the DLNA environment can execute one or more of functions of a digital media server (DMS), digital media player (DMP), digital media renderer (DMR) and digital media controller (DMC).

The DMS can access media content in a UPnP AV region and stores media content or provides the media content to the DMP or DMR. The DMS can allow the DMC to search media content and include a broadcast receiver and broadcast middleware for receiving a digital broadcast. The functions of the DMS can be executed by a mobile device, PC, set-top box, CD/DVD player, TV, etc.

The DMP plays selected media content and can search the DMS for media content as a DLNA device including functions of the DMC and DMR. That is, a DMP can select and control media content and play the selected media content. The function of the DMP can be executed by a mobile terminal, TV receiver, PC, etc. which include an audio output unit and a video output unit.

The DMR reproduces selected media content. The function of the DMR can be executed by a TV receiver, AV receiver, stereo speaker, etc.

The DMC controls media content of the DMS to be reproduced through the DMR. A user can search the DMS for desired media content through the DMC and control the DMS to transmit the media content to a specific DMR. The function of the DMC can be executed by a mobile device such as a smartphone, smartpad, PC, etc.

Devices connected to the home network can simultaneously execute two or more of the functions of the DMS, DMP, DMR and DMC.

The set-top box can function as a content connection path since the set-top box can play or store broadcast content and content downloaded or streamed through IP. Accordingly, the set-top box has evolved into an apparatus capable of functioning as the DMS of DLAN and many electronic devices in a house are automatically linked to a server. Accordingly, the set-top box can operate devices connected thereto using DLNA technology.

Therefore, the present invention sets an operation method of a device connected to the set-top box such that the device minimizes or mutes the volume of event generation alarm sound while the set-top box reproduces content, through the set-top box serving as the DMS for content that a user is playing or attempts to play. In addition, according to the present invention, messages indicating generation of events (call, text message, washing operation completion alarm, etc.), which are generated during content reproduction in a device connected to the set-top box (DMS) in a concentration mode in which a user can view content without being disturbed by other devices, are directly transmitted to the set-top box and the set-top box stores the messages and simultaneously displays the stored messages on the screen upon completion of content on an EPG basis or file basis. The set-top box may immediately display a message indicating generation of an event, which is transmitted from a device connected thereto, on the screen during content reproduction to inform the user of generation of the event.

FIG. 2 illustrates an internal configuration of a set-top box 100 to which the present invention is applied.

In FIG. 2, the set-top box is configured to execute the DMS function, and the set-top box may be configured to additionally execute the DMC function. And, a TV receiver may execute the functions of DMC, DMS and DMP when the set-top box is included in the TV receiver. The set-top box illustrated in FIG. 2 may be integrated with a TV receiver or may be configured in the form of a device attached to a computer or a notebook computer. While FIG. 2 illustrates the configuration of the set-top box including a broadcast reception function, the present invention can be applied to any device executing the DMS function without having the broadcast reception function.

The set-top box 100 according to the present invention 100 may include a broadcast receiving unit 10, a communication unit 20, a storage unit 30, a processing unit 40, an input unit 50 and a control unit 60.

The broadcast receiving unit 10 can receive one or more of terrestrial broadcast, satellite broadcast, cable broadcast and IP broadcast and include a tuner, a demodulator, a demultiplexer, a parser, a buffer memory, etc. for broadcast reception. The tuner tunes a signal band selected from a broadcast signal by a user and the demodulator demodulates a modulated signal input to the broadcast receiving unit 10 and outputs digital streams. The demultiplexer selects transport streams corresponding to a desired program from multiplexed transport streams included in the digital streams, the parser collects payload data from packets of the transport streams and divides the payload data into video data and audio data, and the buffer memory temporarily stores the video data and audio data.

The communication unit 20 can be connected to an external content providing server to execute the set-top box function for receiving additional information related to desired content of the user or a program received through the broadcast receiving unit 10, perform the DMS function for transmitting output data processed through the processing unit to a TV receiver corresponding to a DMP or a speaker corresponding to a DMR as a device constituting a home network and communicate with other devices connected to the home network or transmit/receive control signals for controlling other devices.

The storage unit 30 corresponds to a hard disk, solid state disk (SSD) and the like for storing large capacity data and can store digital streams output from the broadcast receiving unit 10 or content received from an external server connected thereto through a network or an interface such as a USB, IEEE 1394, etc. In addition, the storage unit 30 can store information (information on registered devices, information on currently connected devices, external network connection information, etc.) regarding the home network, that is, a database of the home network, when the set-top box 100 functions as a DMS or server of the home network. The database of the home network may be stored in another device connected to the home network or simultaneously stored in the set-top box 100 and another network device.

The processing unit 40 is a reproduction module for reproducing content and can decode content received through the broadcast receiving unit 10 or the communication unit 20 or content stored in the storage unit 30 into the original audio/video signal and output the audio/video signal to an output unit connected thereto in a wired or wireless manner. In addition, the processing unit 40 may further include a graphics generator (not shown) through which information related to the home network and stored in the storage unit 30 can be displayed as text or images on a screen or a menu by which configuration related to the home network can be changed can be generated and output as a video signal. The output video signal is visually represented through an electronic device having a screen display function, for example, a TV, monitor, etc.

The input unit 50 is a device through which a user request or configuration related to content reception and reproduction through the set-top box 100 is input or user configuration related to the home network is input and can be implemented as a keyboard, a mouse, a keypad, a touchpad, a touchscreen or a pair of a remote controller and a remote controller receiver.

The control unit 60 controls the components of the set-top box 100 to output a broadcast signal or reproduced audio/video signals of content through a TV screen and a speaker according to user request and/or set conditions. The control unit 60 can include a system memory (not shown) providing a space for storing data necessary for control operation, environment setting or executing processes and an operating system (not shown) for driving hardware resources of the set-top box 100 and exchanging appropriate signals and/or information with the hardware resources by executing command codes of firmware.

The control unit 60 may control the communication unit 20 to transmit reproduced data with respect to content processed through the processing unit 40 to a renderer (DMR) connected to the home network in a wired or wireless manner or to transmit content received through the broadcast receiving unit 10 or content data stored in the storage unit 30 to another DMP connected to the home network.

The control unit 60 may generate a menu screen through the processing unit 40 such that the user can check information regarding the home network or change configuration through the menu screen, communicate with another home network device under conditions set by the user or generate a control signal for controlling the device and transmit the control signal through the communication unit 20.

When the user reproduces content received through the broadcast receiving unit 10, content streamed through the communication unit 20 or content storage in the storage unit 30, the control unit 60 can check a device currently connected to the home network from a database stored in the storage unit 30, sets the device connected to the home network in a low-sound or mute mode by transmitting a control signal through the communication unit 20, store messages representing event generation, which are transmitted from the connected device during reproduction of content, in the storage unit 30 or an internal memory and control the processing unit 40 to display an image corresponding to the stored messages upon completion of reproduction of content.

Operations of the control unit 60 or operations of applications executed by the control unit 60 are based on an appropriate relay operation (e.g. specific functions provided by the components illustrated in FIG. 2 and the operating system, for example, operations related to input/output, communication with external devices, hardware state check, timer, etc.) of the operating system. A description of the relay operation is omitted.

The configuration of the set-top box 100 illustrated in FIG. 2 is an exemplary and the set-top box 100 may further include components having various functions. However, the set-top box implementing the concept of the present invention by executing an application implementing the concept of the present invention or an additional application needs to be regarded as within the scope of the present invention as long as the set-top box is not excluded from claims even though the set-top box includes components which are not illustrated.

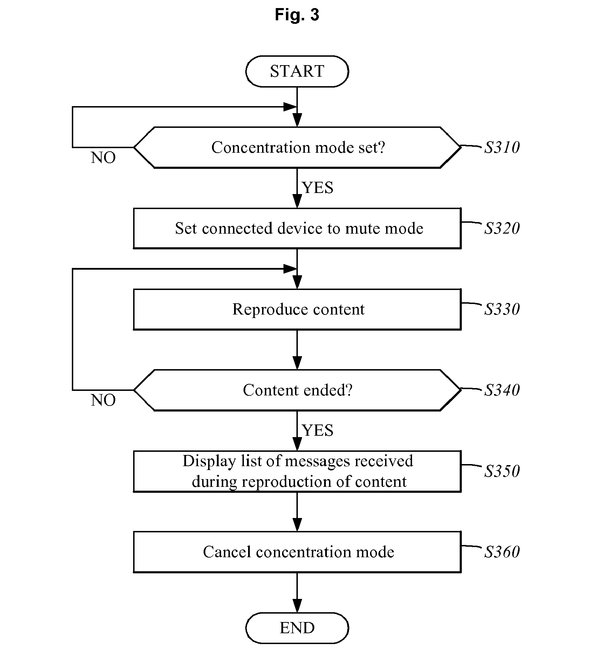

FIG. 3 is a flowchart illustrating a content reproduction method according to an embodiment of the present invention.

A user can reproduce broadcast content received through the broadcast receiving unit 10 of the set-top box 100 or content stored in the storage unit 30 of the set-top box 100 via a remote controller. In this case, the set-top box 100 simultaneously performs a DMC and DMS of the home network. The user may use a TV receiver or the set-top box connected to the TV receiver as a DMC and reproduce content stored in another DMS, for example, a PC or smartphone.

The user can set a concentration mode in order to prevent other devices connected to the home network from disturbing the user when reproducing the received broadcast content or stored content (S310). The control unit 60 of the set-top box 100 transmits a control signal to a device connected to the home network through the communication unit 20 to set the device in a mute (or low volume) mode such that a sound alarming of an event is processed as mute or output with a low volume when the event is generated in the device (S320). The concentration mode is set based on content selected by the user. For prestored content, the concentration mode is set until reproduction end time confirmed through metadata of the content. For broadcast content, the concentration mode is set until the end time of a broadcast program, confirmed through electronic program guide (EPG) data.

The control unit 60 can control the broadcast receiving unit 10 or storage unit 30 and the processing unit 40 to reproduce content selected by the user and output reproduced data to a TV receiver connected in a wired or wireless manner or transmit the reproduced data to a DMP or DMR connected through the home network by controlling the communication unit 20 (S330). Upon reception of a message indicating event generation from a connected device during reproduction of the content, the control unit 60 temporarily stores the message in the internal memory or the storage unit 30.

The control unit 60 reproduces the content until content end time while checking whether the reproduced content has ended on the basis of the metadata or EPG data of the content (S340). Upon completion of the content, the control unit 60 checks messages stored in the internal memory or the storage unit 30 and controls the processing unit 40 to generate an image including a list of messages received during reproduction of the content and to display the image (S350). The control unit 60 may output the message list through a voice instead of the image displayed on the screen of the TV received connected to the set-top box and transmit the same to a smartphone of the user.

Then, the controller 60 can cancel the concentration mode and transmit a control signal to the device connected to the home network to cancel the mute mode set in the device.

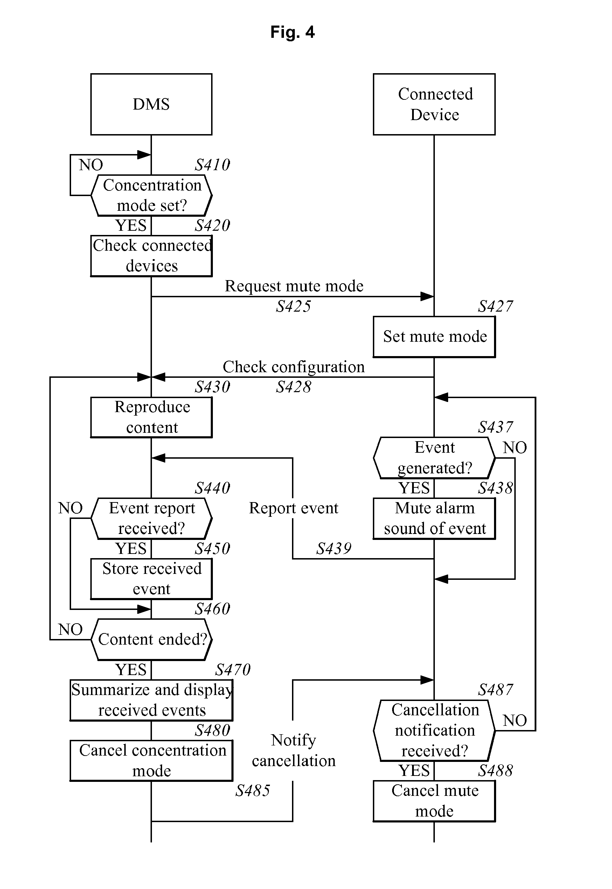

FIG. 4 illustrates operations of a server and a connected device for reproducing content in the concentration mode and signal flows between the server and the connected device according to an embodiment of the present invention.

The user can set the concentration mode in which the user can view content while concentrating thereon without being disturbed by alarms, ringtones, text message reception, etc. generated in surrounding devices when reproducing the content through a DMS of the home network, for example, the set-top box 100 (S41 0). The concentration mode may be set on a content basis or on the basis of a time unit that the user desires, that is, a start time and an end time.

The control unit 60 of the set-top box 100 can generate an information window including a button through which the user can set the concentration mode through a graphics generation module of the processing unit 40 and display the information window or generate an icon through which the concentration mode can be selected and display the icon when the user selects content and starts to play the selected content or schedules reproduction of content.

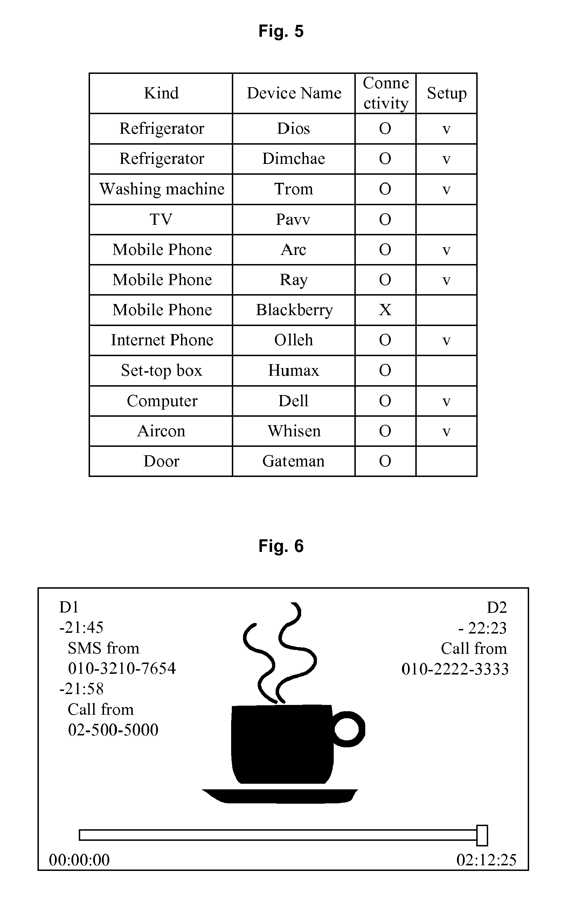

Upon setting of the concentration mode, the control unit 60 checks devices registered in the home network and devices currently connected to the home network on the basis of the database regarding the home network, stored in the storage unit 30 (S420). Information on home network devices may be arranged in the database as shown in FIG. 5.

In the example of FIG. 5, devices such as refrigerators, a washing machine, TV, phones, a set-top box, a computer, an air-conditioner, a door lock, etc. are registered, only one mobile phone (Blackberry) is not connected and other devices are currently connected to the home network.

The control unit 60 controls the communication unit 20 to transmit a control signal for setting an operation method for all or some devices connected to the home network, for example, a control signal for instructing the devices to set the mute (or low volume) mode (S425). The control unit 60 may not set the mute mode for a DMS and DMP or DMR related to reproduction of content selected by the user, for example, TV, set-top box, speaker, etc. and devices related to security and safety, for example, door lock, digital video recorder (DVR), etc.

The mute mode can be set for devices generating a washing operation completion sound, ringtones, text message reception sound, instant message reception sound, other alarm sounds, etc. which may disturb the user when watching content.

Upon reception of the control signal for setting the mute mode, the devices connected to the home network set the mute mode such that, even if predetermined events such as completion of a washing operation, reception of a phone call, text message, instant message, etc. are generated, the devices generate alarm sounds in a low volume or do not generate the alarm sounds (S427) and inform the set-top box 100 corresponding to the DMS that the mute mode has been set (S428). A smartphone or Internet phone may inform people other than the content user that the mute mode has been set at the request of the DMS by displaying the information on the screen thereof.

When the control unit 60 is informed by the connected devices that the mute mode has been set, the control unit 60 starts to reproduce the content selected by the user (S430) and reproduces the content until the same is ended (S460). The control unit 60 can check whether a device is newly connected to the home network, for example, a case in which a person carrying a smartphone enters the house in which the home network is established, during reproduction of the content and set the mute mode for the newly connected device.

When a device in which the mute mode is set is disconnected from the home network, for example, when a person other than the content user exits the house carrying a smartphone, the device may cancel the mute mode.

Upon generation of an event during reproduction of the content (S437), a device, which is connected to the home network and set in the mute mode, mutes alarming sound of the event or reduces the volume of the sound (S438) and reports the generated event to the set-top box 100 (S439). For example, a washing machine can generate a message including a washing operation end time and transmit the message to the set-top box 100 upon completion of a washing operation. A phone can transmit a call incoming time and a caller number to the set-top box 100 upon reception of a call and generate a message including all or part of a reception time, caller number or name, contents, etc. upon reception of a text message or instant message and transmit the message to the set-top box 100.

The connected device set in the mute mode can maintain the mute mode until a concentration mode cancellation notification is received from the set-top box 100 (S487).

Upon reception of a message indicating event generation from a device set in the mute mode (S440), the control unit 60 can temporarily store the received message in the storage unit 300 or internal memory (S450).

The control unit 60 repeats the content reproduction step S430, event message reception check step S440 and received message storage step S450 until the content is ended (S460).

The control unit 60 can check messages received during reproduction of the content, summarize the messages and output the same through an image, sound or message sent to other devices, for example, a smartphone of the user when the content is ended (S470).

FIG. 6 illustrates an image displaying messages indicating events generated in devices, which are received during content reproduction, after concentration mode reproduction of content is ended according to an embodiment of the present invention. Referring to FIG. 6, messages received from different devices D1 and D2 can be displayed in relation to the corresponding devices in chronological order. It can be known from FIG. 6 that a message (SMS message) has been received through phone D1 and a call has been received through phone D2. The messages may be aligned and displayed in chronological order without being classified according to the devices. The messages can include devices in which events are generates, event types and event generation time. The messages can further include a caller number or caller information when a device transmitting an event generation message is a phone. When a generated event is reception of a text message or instant message, the messages can further include the contents of the text message or instant message.

The control unit 60 cancels the concentration mode (S480) and informs the devices in which the mute mode is set (S485). The devices in which the mute mode is set cancel the low volume or mute mode (S488) upon reception of the concentration mode cancellation notification (S487).

When the same or similar message is repeated a predetermined number of times or more, for example, when a device in which the mute mode is set is a smartphone or Internet phone and a call or a text message or instant message is received from the same sender twice or three times and thus a message indicating the same is repeatedly transmitted, the control unit 60 may control the processing unit 40 to generate a message indicating repeated event generation and output the message along with the image or sound of the reproduced content before the content reproduction is ended.

An event notification message may be output in the form of an image or sound immediately upon reception instead of being summarized and output after content reproduction is ended.

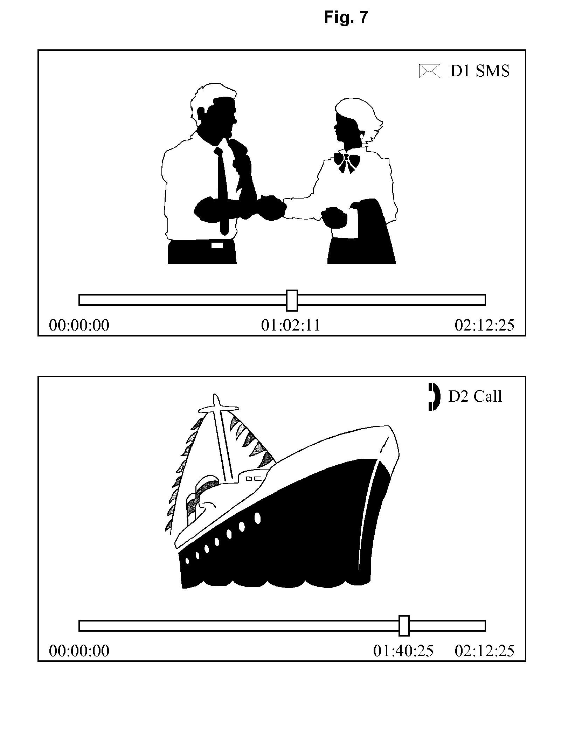

FIG. 7 illustrates images displaying events of devices, received during concentration mode reproduction of content, according to an embodiment of the present invention. Referring to FIG. 7, text including a figure indicating reception of an SMS message through phone D1 after a lapse of one hour two minutes eleven seconds from when content is started is displayed at the top of the right side of the upper image and text including a figure indicating reception of a call through phone D2 after a lapse of one hour forty minutes twenty-five seconds from when content is started is displayed at the top of the right side of the lower image.

It should be understood that there is no intent to limit the invention to the particular forms disclosed, but on the contrary, the invention is to cover all modifications, equivalents, and alternatives falling within the spirit and scope of the invention as defined by the claims.

## Claims

1. A method for reproducing content, comprising:
selecting content from a first device connected to a network; and
setting an operation method of one or more second devices included in the network with regard to reproduction of the content.

2. The method of claim 1, wherein the setting of the operation method comprises setting the second devices in a mute or low-volume mode.

3. The method of claim 1 or claim 2, further comprising outputting messages indicating event generation, received from the second devices during reproduction of the content, when reproduction of the content is ended.

4. The method of claim 3, wherein the output messages are displayed in relation to the second devices corresponding thereto or aligned and displayed in chronological order.

5. The method of claim 1 or claim 2, further comprising immediately outputting messages upon reception of the messages from the second devices during reproduction of the content,
wherin the names of the second devices and event types related to the messages are displayed along with the messages.

6. The method of claim 5, wherein, when the second devices related to the messages correspond to phones, caller information is displayed along with the messages.

7. The method of claim 6, wherein, when messages about events related to the same sender are received a predetermined number of times, a message indicating the same is output.

8. The method of claim 2, wherein the setting of the operation method comprises selectively setting the second devices in the mute or low-volume mode according to types of the second devices such that a device related to reproduction of the content or a device related to security is not set in the mute or low-volume mode.

9. The method of one of claims 2 to 8, wherein the mute or low-volume mode is set based on a file of the content or a program of electronic program guide.

10. An apparatus for reproducing content, comprising:
a communication unit (20) for exchanging data with devices connected to a network; and
a controller (60) for selecting content from a first device connected to the network and transmitting a signal for setting an operation method of one or more second devices included in the network with regard to reproduction of the content, through the communication unit (20).

11. The apparatus of claim 10, wherein the controller transmits a signal for setting the second devices in a mute or low-volume mode through the communication unit but does not set a device related to reproduction of the content or a device related to security in the mute or low-volume mode.

12. The apparatus of claim 10 or claim 11, wherein the controller controls messages indicating event generation, received from the second devices during reproduction of the content, to be output when reproduction of the content is ended, and
wherein the controller classifies two or more messages by devices or arranges the messages in chronological order and displays the same.

13. The apparatus of claim 10 or claim 11, wherein the controller immediately outputs messages upon reception of the messages from the second devices during reproduction of the content by displaying the names of the second devices and event types related to the messages along with the messages.

14. The apparatus of claim 13, wherein the controller displays caller information along with the messages when the second devices related to the messages correspond to phones and, when messages about events related to the same sender are received a predetermined number of times, outputs a message indicating the same.

15. The apparatus of one of claims 10 to 14, wherein the controller sets the mute or low-volume mode based on a file of the content or a program of electronic program guide.
